# EUROPEAN PATENT APPLICATION

(11) **EP 4 852 167 A1**
(43) Date of publication of application: **09.12.2026**
(21) Application number: 24921987.4
(22) Date of filing: 29.11.2024
(51) Int. Cl.: H01M 50/204, H01M 50/30, H01M 50/271, H01M 50/291, H01M 50/317

(54) **POWER STORAGE DEVICE**

(30) Priority: 29.01.2024 JP 2024011077
(71) Applicant: TOYOTA JIDOSHA KABUSHIKI KAISHA, Toyota-Shi, Aichi-Ken 471-8571 (JP)
(72) Inventor: INOUE, Shigeyuki, Toyota-shi, Aichi 471-8571 (JP); SUGIE, Kazuki, Toyota-shi, Aichi 471-8571 (JP); TAKAHASHI, Yuki, Toyota-shi, Aichi 471-8571 (JP)
(74) Representative: TBK
(86) International application number: PCT/JP2024/042322
(87) International publication number: WO 2025/164069

(57) **Abstract**

There is provided a power storage device including an opening valve and an air-permeable waterproof member, in which an influence on the air-permeable waterproof member by a high-temperature gas or the like is suppressed. A power storage device includes: an accommodation case (2); a power storage unit (3) provided in the accommodation case (2); a partition wall provided in the accommodation case (2) and partitioning an inside of the accommodation case (2) into a first region (20) and a second region (21); an opening valve provided in the accommodation case (2); and an air-permeable waterproof member (6) provided in the accommodation case (2), wherein the power storage unit (3) is provided in the first region (20) in the accommodation case (2), and the opening valve and the air-permeable waterproof member (6) are provided in a portion of the outer surface of the accommodation case (2) that defines the second region (21).

## Description

### TECHNICAL FIELD

The present disclosure relates to a power storage device.

### BACKGROUND ART

Various power storage devices provided with opening valves have been conventionally proposed. A power storage device described in Japanese National Patent Publication No. 2022-516519 includes an accommodation case, and a plurality of power storage units disposed in the accommodation case. A plurality of opening valves are provided in a perimeter surface of the accommodation case. When an internal pressure in the accommodation case becomes equal to or higher than a prescribed pressure, the opening valves are opened. The opening of the opening valves can result in a decrease of the internal pressure in the accommodation case.

### CITATION LIST

### PATENT LITERATURE

PTL 1: Japanese National Patent Publication No. 2022-516519

### SUMMARY OF INVENTION

### TECHNICAL PROBLEM

In the above-described power storage device, the timing at which the opening valves are opened is, for example, the timing at which an emission gas is ejected from the power storage units.

A temperature of the power storage units in the accommodation case may rise and the internal pressure in the accommodation case may become higher than an external pressure outside the accommodation case. Depending on a state in the accommodation case, the internal pressure in the accommodation case may become lower than the external pressure.

Thus, it is conceivable to dispose an air-permeable waterproof member in the accommodation case in order to adjust the internal pressure in the accommodation case.

However, an arrangement relationship between the opening valves and the air-permeable waterproof member is not taken into consideration in above-described Japanese National Patent Publication No. 2022-516519 and the like.

Therefore, a problem such as exposure of the air-permeable waterproof member to a high-temperature gas may occur at the timing at which the opening valves are opened.

The present disclosure has been made in view of the above-described problem and an object thereof is to provide a power storage device including an opening valve and an air-permeable waterproof member, in which an influence on the air-permeable waterproof member by a high-temperature gas or the like is suppressed.

### SOLUTION TO PROBLEM

A power storage device includes: an accommodation case; a power storage unit provided in the accommodation case; a partition wall provided in the accommodation case and partitioning an inside of the accommodation case into a first region and a second region; an opening valve provided in the accommodation case; and an air-permeable waterproof member provided in the accommodation case, wherein the power storage unit is provided in a first portion of an outer surface of the accommodation case that defines the first region, and the opening valve and the air-permeable waterproof member are provided in a second portion of the outer surface of the accommodation case that defines the second region.

When a direction from the first region to the second region is defined as an arrangement direction, in the arrangement direction, the air-permeable waterproof member is located more forward in the arrangement direction than the opening valve.

The accommodation case includes a side wall located in the arrangement direction than the partition wall, and the air-permeable waterproof member is provided in the side wall.

The power storage device further includes an electric device provided in the second region, wherein the air-permeable waterproof member is provided in an adjacent portion of the side wall that is adjacent to the electric device in the arrangement direction.

A second gap space where the electric device 4 is not provided in the second region is wider than a first gap space where the power storage unit is not provided in the first region.

The power storage device further includes an electric device provided in the second region, wherein the air-permeable waterproof member is provided in a portion of the second portion away from an adjacent portion that is adjacent to the electric device on a front side in the arrangement direction. The partition wall 17 is higher in height than the power storage unit.

The accommodation case includes a lower case provided with the partition wall and an upper case disposed above the lower case, and the opening valve is provided in the upper case.

When a direction from the first region to the second region is defined as an arrangement direction and a direction intersecting with the arrangement direction is defined as a width direction, the power storage unit includes a first power storage module and a second power storage module spaced apart from each other in the width direction, the accommodation case includes: a side wall located in the arrangement direction with respect to the second region; and the connection wall extending in the arrangement direction, and passing between the first power storage module and the second power storage module and being connected to the side wall, a hollow portion is formed inside the connection wall, and the air-permeable waterproof member is provided in the side wall and is provided to communicate with the hollow portion.

When the opening valve and the connection wall are viewed in a plan view, a through hole is formed in a portion of the connection wall that is located more forward in the arrangement direction than the opening valve.

### ADVANTAGEOUS EFFECTS OF INVENTION

The present disclosure provides a power storage device including an opening valve and an air-permeable waterproof member, in which an influence on the air-permeable waterproof member by a high-temperature gas or the like can be suppressed.

### BRIEF DESCRIPTION OF DRAWINGS

Fig. 1 is an exploded perspective view showing a power storage device 1 according to a first embodiment.
Fig. 2 is an exploded perspective view showing configurations of a side wall 25 and an electric device 4 and surroundings thereof.
Fig. 3 is a plan view showing the configurations of side wall 25 and electric device 4 and the surroundings thereof.
Fig. 4 is a cross-sectional view showing configurations of an air-permeable waterproof member 6 and side wall 25 and surroundings thereof.
Fig. 5 is an exploded perspective view showing configurations of side wall 25 and electric device 4 and surroundings thereof in a power storage device 1A.
Fig. 6 is a cross-sectional view showing an air-permeable waterproof member 6A and the like.
Fig. 7 is an exploded perspective view showing a power storage device 1B.
Fig. 8 is an exploded perspective view showing configurations of side wall 25 and electric device 4 and surroundings thereof in a power storage device 1C.
Fig. 9 is an exploded perspective view showing a power storage device 1D.

### DESCRIPTION OF EMBODIMENTS

Embodiments of the present disclosure will be described with reference to the drawings. In the drawings referenced below, the same or corresponding members are denoted by the same reference numerals.

### (First Embodiment)

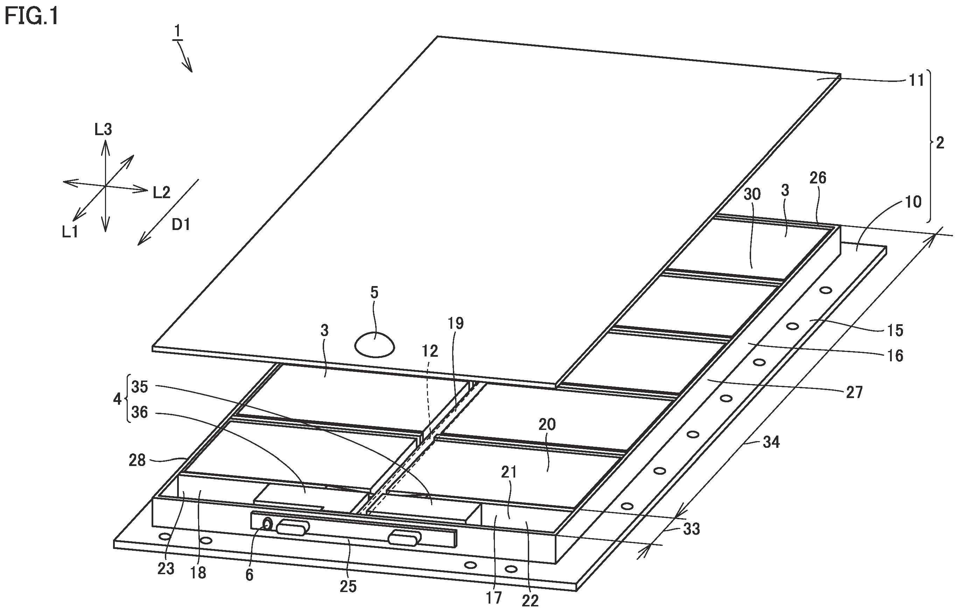

Fig. 1 is an exploded perspective view showing a power storage device 1 according to a first embodiment. Power storage device 1 includes an accommodation case 2, a power storage unit 3 and an electric device 4 accommodated in accommodation case 2, an opening valve 5, and an air-permeable waterproof member 6.

Accommodation case 2 is formed to be elongated in a front-rear direction L1. In other words, accommodation case 2 is formed to be longer in front-rear direction L1 than in a width direction L2. Accommodation case 2 includes a lower case 10 and an upper case 11.

Lower case 10 is formed to be open upward. Upper case 11 is disposed above lower case 10 to close an opening of lower case 10. An accommodation space that accommodates power storage unit 3 and electric device 4 is formed in accommodation case 2.

Lower case 10 includes a bottom plate 15, a perimeter wall 16, partition walls 17 and 18, and a connection wall 19.

Bottom plate 15 is formed to have a plate shape. Perimeter wall 16 is formed on an upper surface of bottom plate 15. Perimeter wall 16 is formed to have a loop-like shape. Perimeter wall 16 includes a side wall 25, a side wall 26, a longer side wall 27, and a longer side wall 28.

Side wall 25 and side wall 26 are spaced apart from each other in front-rear direction L1. Side wall 25 and side wall 26 are formed to extend in width direction L2. Side wall 25 and side wall 26 are spaced apart from each other in front-rear direction L1. Longer side wall 27 and longer side wall 28 are spaced apart from each other in front-rear direction L1. Longer side wall 27 and longer side wall 28 are formed to extend in front-rear direction L1.

Connection wall 19 is disposed to pass through the center of lower case 10 in width direction L2. Connection wall 19 is formed to be hollow. A hollow portion 12 extending in front-rear direction L1 is formed inside connection wall 19. Connection wall 19 is formed to extend in front-rear direction L1. One end of connection wall 19 is connected to side wall 25. The other end of connection wall 19 is connected to side wall 26. Connection wall 19 is lower in height than partition walls 17 and 18 and perimeter wall 16.

Partition walls 17 and 18 partition the accommodation space in accommodation case 2 into a battery region 20 and a device region 21. Partition walls 17 and 18 are disposed more forward than the center of lower case 10 in front-rear direction L1. Partition wall 17 is formed to extend in width direction L2.

Partition wall 17 and partition wall 18 are spaced apart from each other in width direction L2 and upper end surfaces of partition walls 17 and 18 are in contact with upper case 11.

Connection wall 19 is disposed between partition wall 17 and partition wall 18. Since connection wall 19 is lower in height than partition walls 17 and 18, a gap is formed between partition wall 17 and partition wall 18 on an upper surface of connection wall 19. Partition wall 17 is connected to connection wall 19 and longer side wall 27. Partition wall 18 is connected to connection wall 19 and longer side wall 28. Device region 21 is partitioned into a divided region 22 and a divided region 23 by connection wall 19.

Battery region 20 is larger in capacity than device region 21. An arrangement direction D1 corresponds to a direction from battery region 20 to device region 21. In the first embodiment, arrangement direction D1 corresponds to one direction of front-rear direction L1. Specifically, arrangement direction D1 corresponds to a front direction.

Accommodation case 2 includes a first portion 33 defining battery region 20 and 34 defining device region 21.

First portion 33 includes portions of perimeter wall 16 and upper case 11 that are located more forward in arrangement direction D1 than partition walls 17 and 18.

Second portion 34 includes partition walls 17 and 18, and portions of perimeter wall 16 and upper case 11 that are located more forward in arrangement direction D1 than partition walls 17 and 18.

Power storage unit 3 is disposed in battery region 20. Power storage unit 3 includes a plurality of power storage modules 30. Power storage modules 30 are directly electrically connected to each other by a not-shown bus bar. Power storage modules 30 are spaced apart from each other in width direction L2. Furthermore, power storage modules 30 are disposed to be arranged in front-rear direction L1. Power storage modules 30 are spaced apart from each other in width direction L2 and connection wall 19 is disposed to pass between power storage modules 30. Each of power storage modules 30 includes a plurality of power storage cells. Each of the power storage cells includes an electrode assembly and a cell case that accommodates the electrode assembly.

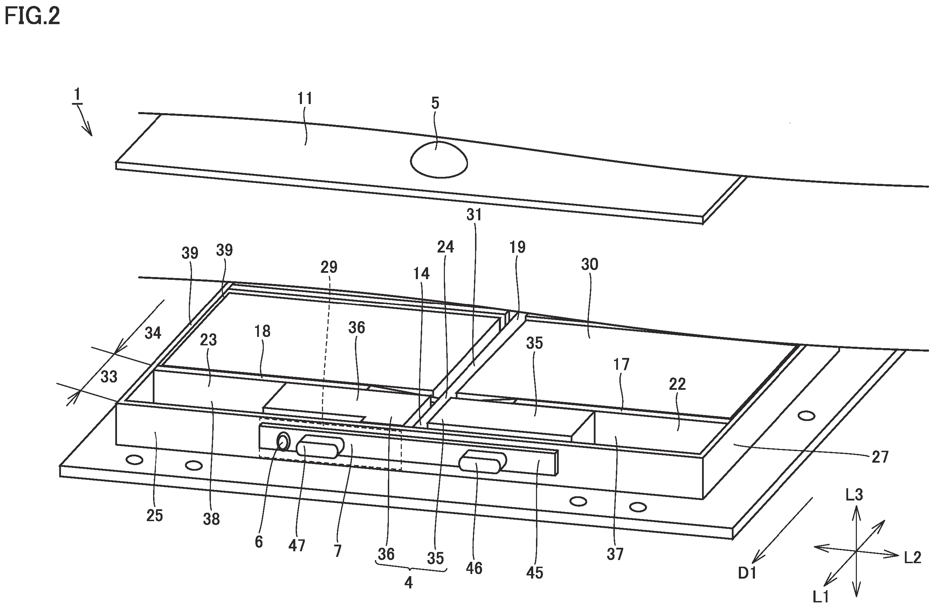

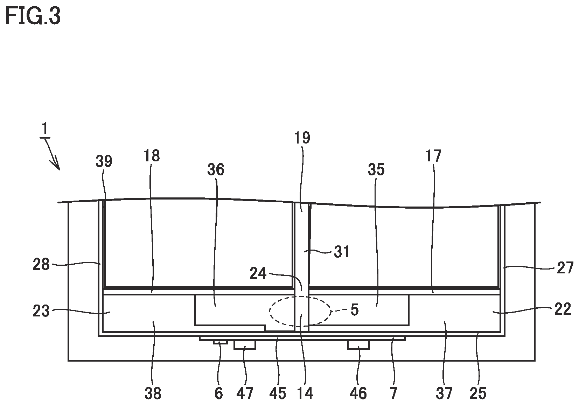

Fig. 2 is an exploded perspective view showing configurations of side wall 25 and electric device 4 and surroundings thereof. Fig. 3 is a plan view showing the configurations of side wall 25 and electric device 4 and the surroundings thereof. In Fig. 3, upper case 11 is not shown.

Since connection wall 19 is lower in height than partition wall 17 and partition wall 18, a gap 24 is formed between partition wall 18 and connection wall 19 on the upper surface of connection wall 19.

Connection wall 19 is lower in height than power storage modules 30 of power storage unit 3. Therefore, a passage 31 passing between power storage modules 30 is formed on the upper surface of connection wall 19.

Electric device 4 is provided in device region 21. Electric device 4 includes a device 35 and a device 36.

Device 35 and device 36 are spaced apart from each other in width direction L2, and device 35 and device 36 are disposed to be in contact with connection wall 19. Device 35 is in contact with partition wall 17 and device 36 is in contact with partition wall 18. Therefore, a space 14 is formed by the upper surface of connection wall 19, device 35 and device 36. Space 14 communicates with gap 24 and passage 31. Opening valve 5 is disposed above space 14.

Device 35 is disposed to be adjacent to connection wall 19 on the longer side wall 27 side and device 35 is provided in divided region 22. Device 35 is spaced apart from longer side wall 27. A gap space 37 is formed between device 35 and longer side wall 27. Device 35 includes a case. A relay, a fuse and the like are accommodated in the case. Device 35 is electrically connected to power storage unit 3.

Device 36 is disposed to be adjacent to connection wall 19 on the longer side wall 28 side and device 36 is provided in divided region 23. Device 36 is spaced apart from longer side wall 28. A gap space 38 is formed between device 36 and longer side wall 28. Device 36 includes a case. A relay, a fuse and the like are accommodated in the case. Device 36 is electrically connected to power storage unit 3.

A gap space 39 where power storage unit 3 is not provided is also formed in battery region 20. However, since power storage unit 3 is disposed to substantially fill in battery region 20, gap space 39 is small. Therefore, a total capacity of gap space 37 and gap space 38 is larger than a capacity of gap space 39. In addition, a capacity of each of gap space 37 and gap space 38 is larger than the capacity of gap space 39.

Power storage device 1 includes a connection module 7. Connection module 7 is provided on an outer surface of side wall 25. Specifically, connection module 7 is provided on a portion of the outer surface of side wall 25 that is located in arrangement direction D1 with respect to devices 35 and 36 and connection wall 19.

Connection module 7 includes a plate 45, a connection portion 46 and a connection portion 47. Connectors of power lines are connected to connection portion 47 and connection portion 47, respectively. The connectors are electrically connected to device 35 and device 36, respectively.

Air-permeable waterproof member 6 is provided in second portion 34 of accommodation case 2 that defines device region 21.

In the example shown in this figure, air-permeable waterproof member 6 is provided at a position of side wall 25 that is adjacent to devices 35 and 36 and connection wall 19 on the front side in arrangement direction D1. Specifically, air-permeable waterproof member 6 is provided in an adjacent portion 29 of side wall 25 that is adjacent to device 36.

Air-permeable waterproof member 6 is disposed below an upper end of side wall 25 in an up-down direction L3. In the example shown in this figure, air-permeable waterproof member 6 is disposed at the center of side wall 25 in up-down direction L3.

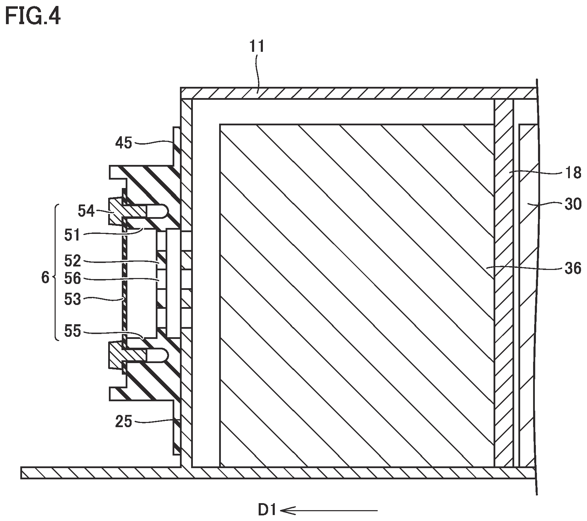

Fig. 4 is a cross-sectional view showing configurations of air-permeable waterproof member 6 and side wall 25 and surroundings thereof. Side wall 25 is provided with a plurality of vent holes 50.

Air-permeable waterproof member 6 includes a tubular portion 51, a thin plate 52, an air-permeable waterproof membrane 53, and a fixing member 54. Tubular portion 51 is formed to be hollow and tubular portion 51 is provided with a through hole 55. Thin plate 52 is provided in tubular portion 51 and thin plate 52 is provided with a plurality of vent holes 56.

Air-permeable waterproof membrane 53 is provided to close an opening of tubular portion 51 located outside and air-permeable waterproof membrane 53 is fixed by fixing member 54. Air-permeable waterproof membrane 53 is made of, for example, Gore-Tex (registered trademark) or the like.

For example, a temperature of power storage unit 3 may rise and an internal pressure in accommodation case 2 may become higher than an outside air pressure outside accommodation case 2. In this case, the air in accommodation case 2 is discharged outside accommodation case 2 through air-permeable waterproof membrane 53. Depending on the external environment, the internal pressure in accommodation case 2 may become lower than the outside air pressure outside accommodation case 2. In this case, the outside air flows into accommodation case 2 through air-permeable waterproof membrane 53.

In this way, air-permeable waterproof member 6 maintains the internal pressure in accommodation case 2 within a certain range. On the other hand, since air-permeable waterproof membrane 53 does not allow a liquid such as water to pass therethrough, air-permeable waterproof membrane 53 suppresses inflow of rainwater or the like into accommodation case 2.

In Fig. 1, opening valve 5 is provided in second portion 34 of accommodation case 2 that defines device region 21. In the example shown in Fig. 1, opening valve 5 is provided in upper case 11. Opening valve 5 is formed to be opened when the internal pressure in accommodation case 2 becomes equal to or higher than a prescribed pressure.

In power storage device 1 configured as described above, an internal short circuit or the like may occur in the electrode assembly or the like of the power storage cell in power storage unit 3. When the internal short circuit or the like occurs in the electrode assembly, the temperature of the power storage cell may become high and an emission gas may be discharged from power storage unit 3. The emission gas is high in temperature and the emission gas often contains metal blast such as debris of the electrode assembly.

Since power storage unit 3 is provided in battery region 20 and partition walls 17 and 18 are disposed between battery region 20 and device region 21, the emission gas is likely to stay in battery region 20 and inflow of a high-temperature gas into device region 21 is suppressed.

Since opening valve 5 and air-permeable waterproof member 6 are provided in device region 21, exposure of opening valve 5 and air-permeable waterproof member 6 to the high-temperature gas can be suppressed.

Since partition walls 17 and 18 are higher in height than power storage unit 3, inflow of the emission gas generated from power storage unit 3 into device region 21 is suppressed.

In addition, since partition walls 17 and 18 are in contact with upper case 11, inflow of the high-temperature gas into device region 21 is suppressed. Thus, exposure of air-permeable waterproof member 6 to the high-temperature gas is suppressed.

Furthermore, since air-permeable waterproof member 6 is located more forward in arrangement direction D1 than opening valve 5, exposure of air-permeable waterproof member 6 to the high-temperature gas is suppressed.

Air-permeable waterproof member 6 is provided in side wall 25. Therefore, a stay of a foreign object such as rainwater on an upper surface of air-permeable waterproof member 6 can be suppressed, as compared with the case in which air-permeable waterproof member 6 is provided in upper case 11. Thus, the air permeability of air-permeable waterproof member 6 can be secured.

When an amount of the high-temperature gas discharged from connection module 7 increases, the internal pressure in accommodation case 2 rises. When the internal pressure in accommodation case 2 becomes higher than the prescribed pressure, opening valve 5 is opened. When the internal pressure in accommodation case 2 becomes high, upper case 11 is deformed to bulge upward. Thus, a gap is formed between upper case 11 and partition walls 17 and 18.

The high-temperature gas arrives at opening valve 5 through this gap and the high-temperature gas is discharged from opening valve 5.

In Figs. 2 and 3, passage 31, gap 24 and space 14 are formed on the upper surface of connection wall 19 and opening valve 5 is disposed above space 14. The emission gas sequentially passes through passage 31, gap 24 and space 14 and is discharged from opening valve 5.

Since air-permeable waterproof member 6 is provided more forward in arrangement direction D1 than opening valve 5, contact of the emission gas with air-permeable waterproof member 6 when the emission gas is discharged from opening valve 5 is suppressed.

In Fig. 4, air-permeable waterproof member 6 is provided at the center of side wall 25 in up-down direction L3 and opening valve 5 is provided in upper case 11. Therefore, air-permeable waterproof member 6 is located below opening valve 5. Therefore, the emission gas flows upward when the emission gas is discharged from opening valve 5, and thus, arrival of the emission gas at air-permeable waterproof member 6 is suppressed.

In Figs. 2 and 3, air-permeable waterproof member 6 is provided in adjacent portion 29 of side wall 25. Therefore, even if the emission gas flows into device region 21, arrival of the emission gas at air-permeable waterproof member 6 is suppressed by device 36. Particularly, contact of the metal blast contained in the emission gas with air-permeable waterproof member 6 can be suppressed.

In addition, since device 36 is higher in height than connection wall 19 and device 36 is disposed to be in contact with partition wall 18, inflow of the metal blast of the emission gas into divided region 23 can be suppressed.

As described above, as opening valve 5 discharges the emission gas, the amount of the emission gas generated from power storage unit 3 may decrease with the passage of time. In such a case, the internal pressure in accommodation case 2 decreases, and when the internal pressure in accommodation case 2 becomes lower than the prescribed pressure, opening valve 5 is closed.

When the internal pressure in accommodation case 2 decreases, an amount of deformation of upper case 11 that was deformed to bulge upward decreases and upper case 11 comes into contact with partition walls 17 and 18.

At this time, the temperature of the power storage cell where the internal short circuit or the like occurred may be high and the emission gas is present in battery region 20.

In such a state, depending on the internal pressure in accommodation case 2 and the outside air pressure outside accommodation case 2, the air outside accommodation case 2 may flow into accommodation case 2 through air-permeable waterproof member 6 with the passage of time.

Air-permeable waterproof member 6 is provided in device region 21 and partition walls 17 and 18 are provided between battery region 20 and device region 21. Therefore, inflow of the air (incoming air) having come in from air-permeable waterproof member 6 into battery region 20 is suppressed. Inflow of the incoming air into battery region 20 and arrival at the power storage cell that is high in temperature can be suppressed.

Since partition walls 17 and 18 are higher in height than power storage unit 3, partition walls 17 and 18 can be brought into contact with upper case 11 before the incoming air flows into accommodation case 2. Thus, inflow of the incoming air into battery region 20 is suppressed.

In the example shown in Figs. 2 and 3, the air having come in from air-permeable waterproof member 6 flows into divided region 23. Gap space 38 of divided region 23 is larger in capacity than gap space 39.

Therefore, the incoming air spreads in divided region 23 and inflow into battery region 20 is suppressed.

Air-permeable waterproof member 6 is provided in adjacent portion 29 of side wall 25 that is adjacent to device 36. Therefore, when the incoming air flows into divided region 23, the incoming air hits device 36, which makes it possible to decrease an inflow speed at which the incoming air flows into gap space 38.

### (Second Embodiment)

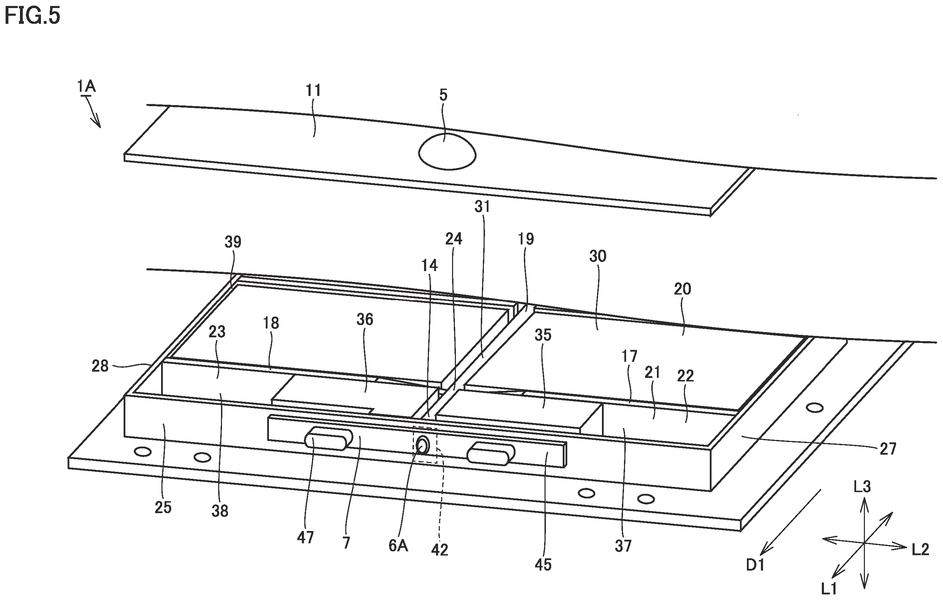

A power storage device 1A according to a second embodiment will be described with reference to Fig. 5 and the like. A configuration of power storage device 1A is substantially the same as the configuration of power storage device 1 except for a position where an air-permeable waterproof member 6A is mounted.

Fig. 5 is an exploded perspective view showing configurations of side wall 25 and electric device 4 and surroundings thereof in power storage device 1A. Side wall 25 includes an adjacent portion 42 that is adjacent to connection wall 19 on the front side in arrangement direction D1. Air-permeable waterproof member 6A is provided in adjacent portion 42.

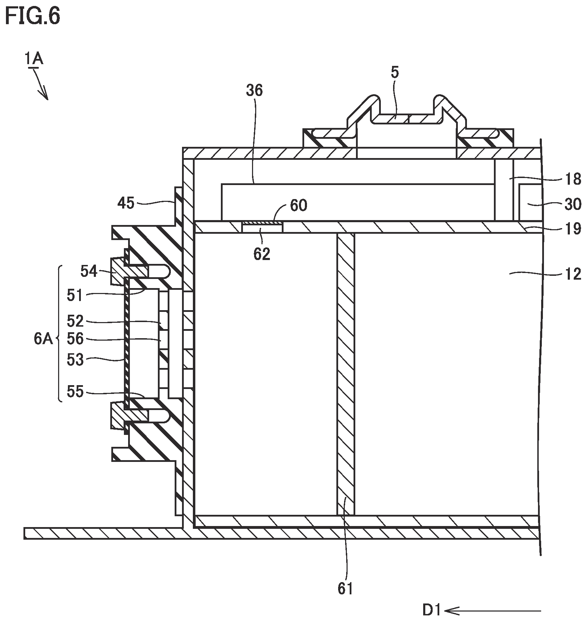

Fig. 6 is a cross-sectional view showing air-permeable waterproof member 6A and the like. Tubular portion 51 of air-permeable waterproof member 6A communicates with hollow portion 12 of connection wall 19. Connection wall 19 includes a closing wall 61 provided in adjacent portion 29. Connection wall 19 is provided with a through hole 62. Through hole 62 is formed from an end of connection wall 19 to closing wall 61, of the upper surface of connection wall 19. In front-rear direction L1, through hole 62 is provided more forward in arrangement direction D1 than opening valve 5. A mesh-like net member 60 is provided in an opening of through hole 62.

When the internal pressure in accommodation case 2 decreases, the air in accommodation case 2 passes through through hole 62 and hollow portion 12 and arrives at air-permeable waterproof member 6A. Then, the air is discharged outside accommodation case 2 from air-permeable waterproof member 6A.

In power storage device 1A configured as described above, when the emission gas is discharged from power storage unit 3, the emission gas stays in battery region 20.

At this time, the emission gas staying in battery region 20 may flow into hollow portion 12 of connection wall 19. However, since closing wall 61 is provided in connection wall 19, arrival of the emission gas at air-permeable waterproof member 6A is suppressed even if the emission gas flows into hollow portion 12 in battery region 20. Thus, damage of air-permeable waterproof member 6A is suppressed.

In above-described power storage device 1A, when the amount of the emission gas discharged from power storage unit 3 increases and the internal pressure in accommodation case 2 becomes higher than the prescribed pressure, opening valve 5 is opened and the emission gas is discharged from opening valve 5.

Through hole 62 is provided more forward in arrangement direction D1 than opening valve 5. Therefore, arrival of the emission gas at through hole 62 when the emission gas is discharged from opening valve 5 can be suppressed.

Through hole 62 is provided with net member 60. Therefore, even if the emission gas arrives at space 14, passage of the metal blast through through hole 62 is suppressed.

Air-permeable waterproof member 6 is provided at a position away from through hole 62 in arrangement direction D1. Therefore, even if the metal blast flows into hollow portion 12 of connection wall 19, arrival of the metal blast at air-permeable waterproof member 6 can be suppressed.

### (Third Embodiment)

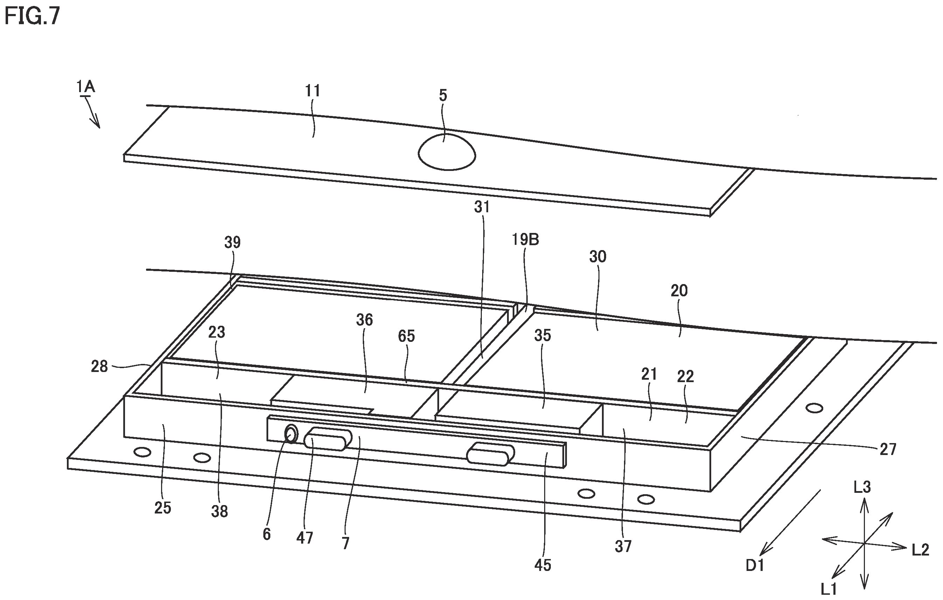

A configuration of a power storage device 1B according to a third embodiment will be described with reference to Fig. 7 and the like. Fig. 7 is an exploded perspective view showing power storage device 1B. The configuration of power storage device 1B is substantially the same as the configuration of power storage device 1 except for a partition wall 65 and a connection wall 19B.

Partition wall 65 is formed to connect longer side wall 27 and longer side wall 28. Connection wall 19B is connected to partition wall 65. Partition wall 65 is higher in height than power storage modules 30 of power storage unit 3. Partition wall 65 is in contact with upper case 11.

In the third embodiment as well, a space in accommodation case 2 is partitioned into battery region 20 and device region 21 by partition wall 65.

In addition, devices 35 and 36, opening valve 5 and air-permeable waterproof member 6 are provided in device region 21.

In power storage device 1B configured as described above, the emission gas may be discharged from power storage unit 3.

Partition wall 65 is formed from longer side wall 27 to longer side wall 28 and partition wall 65 is in contact with upper case 11. Therefore, inflow of the emission gas into device region 21 can be suppressed.

### (Fourth Embodiment)

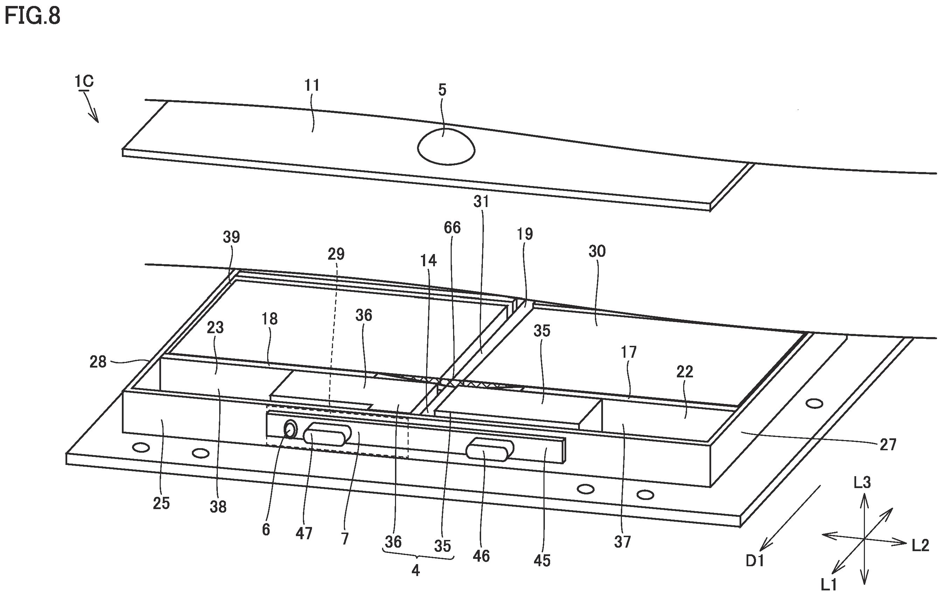

A configuration of a power storage device 1C according to a fourth embodiment will be described with reference to Fig. 8 and the like. The configuration of power storage device 1C is substantially the same as the configuration of power storage device 1 except for a net member 66.

Fig. 8 is an exploded perspective view showing configurations of side wall 25 and electric device 4 and surroundings thereof in power storage device 1C.

Net member 66 is provided on the upper surface of connection wall 19 and is provided to connect partition wall 17 and partition wall 18. According to power storage device 1C, inflow of the metal blast into device region 21 when the emission gas is discharged from power storage unit 3 can be suppressed. The configuration of net member 66 may be applied to power storage device 1 according to the first embodiment and power storage device 1A according to the second embodiment.

### (Fifth Embodiment)

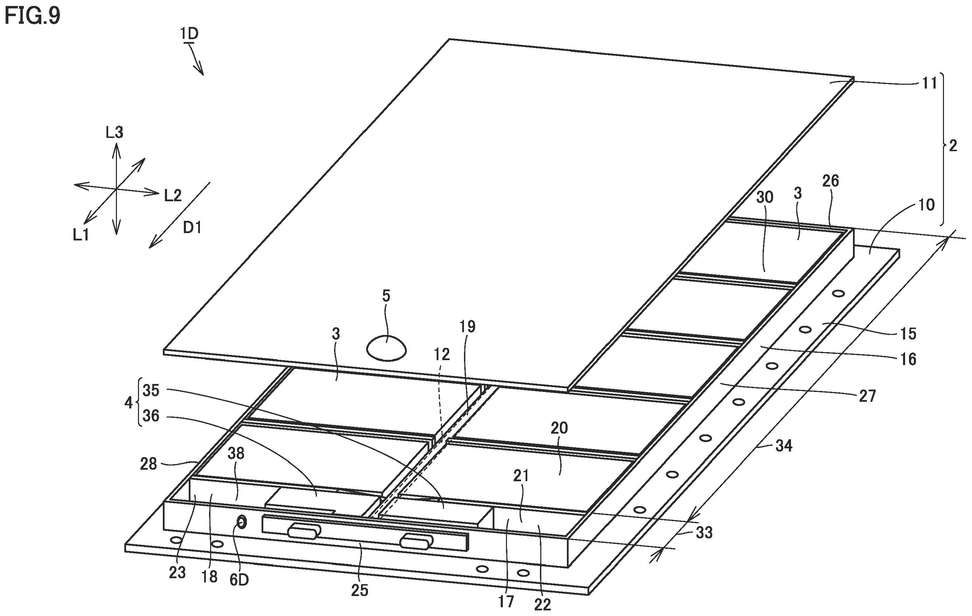

A power storage device 1D according to a fifth embodiment will be described with reference to Fig. 9 and the like. Fig. 9 is an exploded perspective view showing power storage device 1D. Power storage device 1D includes an air-permeable waterproof member 6D.

Air-permeable waterproof member 6D is provided at a position away from a portion of side wall 25 that is located more forward in arrangement direction D1 than electric device 4. Air-permeable waterproof member 6D is provided more forward in arrangement direction D1 than divided region 23.

In above-described power storage device 1D, when the internal pressure in power storage device 1D rises temporarily and thereafter the internal pressure decreases, the air flows into power storage device 1D from air-permeable waterproof member 6D.

At this time, air-permeable waterproof member 6D communicates with divided region 23 and allows the air having come in from air-permeable waterproof member 6D to stay in divided region 23. Thus, arrival of the air having come in from air-permeable waterproof member 6D at battery region 20 can be suppressed. As to the position where air-permeable waterproof member 6D is mounted, air-permeable waterproof member 6D may be provided, for example, in a portion of longer side walls 27 and 28 that is located more forward than partition walls 17 and 18.

It should be understood that the embodiments disclosed herein are illustrative and non-restrictive in every respect. The scope of the present disclosure is defined by the terms of the claims, and is intended to include any modifications within the scope and meaning equivalent to the terms of the claims.

### REFERENCE SIGNS LIST

1, 1A, 1B, 1C power storage device; 2 accommodation case; 3 power storage unit; 4 electric device; 5 opening valve; 6, 6A air-permeable waterproof member; 7 connection module; 10 lower case; 11 upper case; 12 hollow portion; 14 space; 15 bottom plate; 16, 1616 perimeter wall; 17, 18, 65 partition wall; 19, 19B connection wall; 20 battery region; 21 device region; 22, 23 divided region; 24 gap; 25, 26 side wall; 27, 28 longer side wall; 29, 42 adjacent portion; 30 power storage module; 31 passage; 33 first portion; 34 second portion; 35, 36 device; 37, 38, 39 gap space; 45 plate; 46, 47 connection portion; 50, 56 vent hole; 51 tubular portion; 52 thin plate; 53 air-permeable waterproof membrane; 54 fixing member; 55, 62 through hole; 60, 66 net member; 61 closing wall; D1 arrangement direction; L1 front-rear direction; L2 width direction; L3 up-down direction.

## Claims

1. A power storage device comprising:
an accommodation case;
a power storage unit provided in the accommodation case;
a partition wall provided in the accommodation case and partitioning an inside of the accommodation case into a first region and a second region;
an opening valve provided in the accommodation case; and
an air-permeable waterproof member provided in the accommodation case, wherein
the power storage unit is provided in the first region, of an outer surface of the accommodation case, and
the opening valve and the air-permeable waterproof member are provided in a portion of the outer surface of the accommodation case that defines the second region.

2. The power storage device according to claim 1, wherein
when a direction from the first region to the second region is defined as an arrangement direction,
in the arrangement direction, the air-permeable waterproof member is located more forward in the arrangement direction than the opening valve.

3. The power storage device according to claim 2, wherein
the accommodation case includes a side wall located more forward in the arrangement direction than the partition wall, and
the air-permeable waterproof member is provided in the side wall.

4. The power storage device according to claim 3, further comprising
an electric device provided in the second region, wherein
the air-permeable waterproof member is provided in an adjacent portion of the side wall that is adjacent to the electric device in the arrangement direction.

5. The power storage device according to claim 4, wherein
a second gap space where the electric device is not provided in the second region is wider than a first gap space where the power storage unit is not provided in the first region.

6. The power storage device according to claim 3, further comprising
an electric device provided in the second region, wherein
the air-permeable waterproof member is provided in a portion away from an adjacent portion that is adjacent to the electric device on a front side in the arrangement direction.

7. The power storage device according to claim 3, wherein
the partition wall is higher in height than the power storage unit.

8. The power storage device according to any one of claims 1 to 7, wherein
the accommodation case includes a lower case provided with the partition wall and an upper case disposed above the lower case, and
the opening valve is provided in the upper case.

9. The power storage device according to claim 1, wherein
when a direction from the first region to the second region is defined as an arrangement direction and a direction intersecting with the arrangement direction is defined as a width direction,
the power storage unit includes a first power storage module and a second power storage module spaced apart from each other in the width direction,
the accommodation case includes:
a side wall located in the arrangement direction with respect to the second region; and
the connection wall extending in the arrangement direction, and passing between the first power storage module and the second power storage module and being connected to the side wall,
a hollow portion is formed inside the connection wall, and
the air-permeable waterproof member is provided in the side wall and is provided to communicate with the hollow portion.

10. The power storage device according to claim 9, wherein
a through hole is formed in a portion of the connection wall that is located more forward in the arrangement direction than the opening valve.
